# EUROPÄISCHE PATENTANMELDUNG

(11) **EP 2 719 944 A2**
(43) Veröffentlichungstag der Anmeldung: **16.04.2014**
(21) Anmeldenummer: 13003649.4
(22) Anmeldetag: 20.07.2013
(51) Int. Cl.: F21V 13/04, F21V 7/04, F21V 14/06, F21V 17/00, F21Y 101/02

(54) **Leuchte und Leuchtvorrichtung für eine Leuchte**

(30) Priorität: 15.10.2012 DE 202012009801 U
(71) Anmelder: LTS Licht & Leuchten GmbH, 88069 Tettnang (DE)
(72) Erfinder: Köpplin, Erich, 88250 Weingarten (DE)
(74) Vertreter: Otten, Roth, Dobler & Partner

(57) **Zusammenfassung**

Es wird eine Leuchtvorrichtung (8) für eine Leuchte zur Bildung eines beleuchteten Bereichs in einer Abstrahlrichtung der Leuchtvorrichtung (8) vorgeschlagen, wobei die Leuchtvorrichtung (8) eine Lichtquelle (9) und eine Linse (11), die entlang einer optischen Achse angeordnete sind, und eine außen um die optische Achse angeordnete Reflektoreinheit (10) aufweist, und wobei durch Licht der Lichtquelle (9) ein von der Linse (11) gebildeter Linsen-Leuchtkegel (13) und ein von der Reflektoreinheit (10) gebildeter Reflektor-Leuchtbereich (12) erzeugbar ist. Erfindungsgemäß sind die Linse (11), die Reflektoreinheit (10) und die Lichtquelle (9) derart aufeinander abgestimmt sind, dass eine Außenform einer Hüllfläche des Linsen-Leuchtkegels (13), die sich durch am weitesten aufgespreizte Lichtstrahlen von der Lichtquelle (9) ergibt, die gerade noch die Linse (11) in ihrem Randbereich durchlaufen, und eine Außenform einer Hüllfläche des Reflektor-Leuchtbereichs (12), die sich durch Lichtstrahlen der Lichtquelle (9) ergibt, welche die Linse (11) nicht mehr durchlaufen und mit größtem Neigungswinkel die optische Achse kreuzend vom Reflektor (10) reflektiert werden, über die wesentliche Länge der optischen Achse zumindest annähernd übereinstimmen, wobei eine Lichtwirkung des Linsen-Leuchtkegels (13) und eine Lichtwirkung des Reflektor-Leuchtbereichs (12) sich zu einer nahezu homogenen Lichtwirkung des beleuchtbaren Bereichs ergänzen.

## Beschreibung

Leuchten mit Komponenten zur Lichtabbildung bzw. Leuchtvorrichtungen für Leuchten sind in einer Vielzahl von Ausgestaltungen für unterschiedliche Einsatzzwecke bekannt.

Beispielsweise werden Leuchtvorrichtungen in der Kombination aus einer künstlichen Lichtquelle, einer Reflektoreinheit und einer optischen Linse eingesetzt, um eine gewünschte Leuchtwirkung der Leuchtvorrichtung bzw. der Leuchte zu erzielen. Solche Kombinationen sind beispielsweise bei Raumleuchten realisiert.

Als Reflektoreinheiten kommen häufig so genannte Hohlspiegel-Reflektoren mit einer gewölbten Innenseite des Reflektors zum Einsatz. Mit dem Reflektor wird eine ringartige Lichtabbildung gebildet, die einen nicht bzw. schwach ausgeleuchteten mittleren Bereich umgibt. Mit von der Linse kommendem Licht wird eine Ausleuchtung des mittleren Bereichs erreicht, wobei die Lichtwirkung des mittleren Bereichs und des umgebenden Ringbereichs an entsprechend angeleuchteten Gegenständen vom menschlichen Auge unterscheidbar ist.

### Aufgabe und Vorteile der Erfindung

Aufgabe der vorliegenden Erfindung ist es, ausgehend vom genannten Stand der Technik, eine Leuchte bzw. eine Leuchtvorrichtung bereitzustellen, welche im Hinblick auf eine homogene Lichtabbildung des erzeugten Lichtbündels vorteilhaft ist.

Insbesondere soll eine gegenüber dem Stand der Technik effizientere Lichtwirkung erreicht werden, bevorzugt ohne erhöhten Herstellungsaufwand.

Diese Aufgabe wird durch die unabhängigen Ansprüche gelöst.

In den abhängigen Ansprüchen sind zweckmäßige und vorteilhafte Weiterbildungen der Erfindung aufgezeigt.

Die Erfindung geht zunächst aus von einer Leuchtvorrichtung für eine Leuchte zur Bildung eines beleuchteten Bereichs in einer Abstrahlrichtung der Leuchtvorrichtung, wobei die Leuchtvorrichtung eine Lichtquelle und eine Linse, die entlang einer optischen Achse angeordnet sind, und eine außen um die optische Achse angeordnete Reflektoreinheit aufweist, und wobei durch Licht der Lichtquelle ein von der Linse gebildeter Linsen-Leuchtkegel und ein von der Reflektoreinheit gebildeter Reflektor-Leuchtbereich erzeugbar ist.

Die künstliche Lichtquelle ist insbesondere eine energiesparende Lichtquelle vorteilhafterweise eine lichtemittierende Diode bzw. LED. Die Linse ist zum Beispiel eine Streu- oder Sammellinse bzw. eine Speziallinse mit zum Beispiel Rippen oder Rillen oder einer anderen Oberflächenkontur.

Die Reflektoreinheit bzw. der Reflektor ist insbesondere geschlossen um die optische Achse ausgebildet, insbesondere in Abstrahlrichtung sich aufweitend, beispielsweise in der Art einer Hohlspiegel-Reflektoreinheit. Die vom Licht der Lichtquelle beaufschlagbare bzw. anstrahlbare innere lichtreflektierende Reflektoroberfläche der Reflektoreinheit kann unterschiedlich geformt bzw. gestaltet sein, z. B. eben und/oder gewölbt bzw. zum Beispiel mit einem insbesondere regelmäßigen oberflächenformendem Muster versehen sein, welches die Art der Abstrahlung des reflektierten Lichtes vom Reflektor in Abstrahlrichtung beeinflusst. Die betreffende Reflektoroberfläche reflektiert insbesondere direkt von der Lichtquelle kommendes Licht räumlich in die Abstrahl- bzw. Hauptabstrahlrichtung.

Ein erster wesentlicher Aspekt der Erfindung liegt darin, dass die Linse, die Reflektoreinheit und die Lichtquelle derart aufeinander abgestimmt sind, dass eine Außenform einer Hüllfläche des Linsen-Leuchtkegels, die sich durch am weitesten aufgespreizte Lichtstrahlen von der Lichtquelle ergibt, die gerade noch die Linse in ihrem Randbereich durchlaufen, und eine Außenform einer Hüllfläche des Reflektor-Leuchtbereichs, die sich durch Lichtstrahlen der Lichtquelle ergibt, welche die Linse nicht mehr durchlaufen und mit größtem Neigungswinkel die optische Achse kreuzend vom Reflektor reflektiert werden, über die wesentliche Länge der optischen Achse zumindest annähernd übereinstimmen, wobei eine Lichtwirkung des Linsen-Leuchtkegels und eine Lichtwirkung des Reflektor-Leuchtbereichs sich zu einer wenigstens nahezu homogenen Lichtwirkung des beleuchtbaren Bereichs ergänzen. Des Weiteren wird eine Blendwirkung ausgeschlossen.

Innerhalb der Hüllfläche des Reflektor-Leuchtbereichs, der sich um die zentrische optische Achse aufweitend bildet, ist ein überwiegender Teil des vom Reflektor insgesamt gebildeten Abstrahlbereichs umfasst. Umgebend in der Art eines schmalen Randbereichs existiert ggf. noch ein vergleichsweise geringer Anteil der von der Reflektorinnenseite reflektierten Strahlen. In Abstrahlrichtung kann sich die Hüllfläche des Reflektor-Leuchtbereichs von innen ggf. immer mehr dem Randleuchtbereich annähern.

Vorteilhafterweise wird mit der erfindungsgemäßen Anordnung erreicht, dass im lichtabstrahlenden Zustand der Lichtquelle über einen zumindest überwiegenden Anteil des von der Leuchtvorrichtung gesamten ausleuchtbaren Bereichs der Linsen-Leuchtkegel und der Reflektor-Leuchtbereich sich so ergänzen bzw. überlappen, dass ein homogener Ausleuchtbereich bzw. eine homogene Lichtdichte im gesamten ausgeleuchteten Lichtbündel erzielt wird. Außen an diesem Lichtbündel, das auch als "hot spot" bezeichnet wird, sind die beiden in Abstrahlrichtung sich aufweitenden Hüllflächen vorhanden. Dabei können die beiden Hüllflächen sich überlagern oder sehr geringfügig voneinander beabstandet sein.

Es ist somit nicht ausgeschlossen, dass von der Reflektoreinheit Licht der Lichtquelle in Abstrahlrichtung reflektiert wird, das auf die optische Achse bezogen weiter außen als die betrachtete Hüllfläche des Reflektor-Leuchtbereichs liegt, was insbesondere im Nahbereich der Reflektoreinheit zu beobachten ist. Über für die Leuchtvorrichtung in der Praxis relevante Abstände zur Leuchtvorrichtung ist jedoch die betrachtete Hüllfläche des Reflektor-Leuchtbereichs räumlich dominierend, so dass nahezu kein bzw. kein beachtenswerter Teil der von der Reflektoreinheit abgestrahlten Lichtstrahlen bezogen auf die optische Achse radial außerhalb der betrachteten Hüllfläche des Reflektor-Leuchtbereichs vorhanden ist.

Die Neigung der Hüllfläche des Linsen-Leuchtkegels und die Neigung der Hüllfläche des Reflektor-Leuchtbereichs sind bezogen auf die optische Achse gleich oder zumindest nahezu gleich. Damit wird eine hohe Effizienz der sich überlagernden Lichtabbildungen erreicht. Des Weiteren können Effekte am Rand der gesamten erzeugbaren Lichtabbildung der erfindungsgemäßen Leuchtvorrichtung durch nicht sich überlagernde Volumenbereiche des Linsen-Leuchtkegels und des Reflektor-Leuchtbereichs, was insbesondere eine geringere Helligkeit im Randbereich bedeutet, auf eine Minimum beschränkt werden.

Der homogen ausleuchtbare Bereich kann sich in einem praxisrelevanten Abstand zur Leuchtvorrichtung bzw. zur Reflektoreinheit in einem betrachteten ebenen Querschnitt zur optischen Achse insbesondere als Kreisfläche mit vergleichsweise hoher Helligkeit bzw. homogener Lichtabbildung über die gesamte Kreisfläche ausbilden.

Die mit der erfindungsgemäßen Anordnung erzielbare Homogenität über nahezu den gesamten Teil einer Querschnittfläche bzw. des Volumens der mit der Leuchtvorrichtung bereitstellbaren Lichtabbildung existiert vorteilhafterweise über sämtliche bei Leuchten bzw. z. B. Strahlern praxisrelevante Abstände zwischen der Leuchtvorrichtung und dem zu beleuchtenden Gegenstand. Bei Raumleuchten können praxisrelevante Abstände beispielsweise ein Maß von deutlich unter einem Meter bis mehrere Meter betragen.

Der Linsen-Leuchtkegel und des Reflektor-Leuchtbereich wirken vorteilhafterweise in ihrem Volumen mit der jeweils darin vorhandenen Lichtdichte bzw. Lichtdichteverteilung ergänzend so zusammen, das eine vergleichsweise hohe Homogenität im "hot spot" erreicht wird. Die beiden Hüllflächen können angenähert beispielsweise ähnlich wie ineinandergesteckte gleichartige Trichter oder Hohlgefäße verstanden werden.

Mit der erfindungsgemäßen Leuchtvorrichtung werden insbesondere die Nachteile bekannter Anordnungen mit vom menschlichen Auge eindeutig feststellbaren Inhomogenitäten bzw. Unterschieden der Lichtwirkung und der Helligkeit in der Lichtabbildung vermieden. Denn bekannte Vorrichtungen weisen Intensitätsunterschiede insbesondere zwischen einem zentralen Bereich der Lichtabbildung, der allein von der Linse herrührt, und einem daran radial zur optischen Achse außen anschließenden Bereich der Lichtabbildung, der von dem Reflektor gebildet ist, auf.

Vorteilhafterweise können mit der Erfindung sowohl näher als auch weiter zur Leuchtvorrichtung entfernte Gegenstände mit homogener Lichtwirkung beleuchtet werden.

Vorteilhafterweise ist die Leuchtvorrichtung derart mit einer innenseitig in der Grundform konkav ausgebildeten Reflektoreinheit ausgebildet, dass die wie oben definierte Hüllfläche des Reflektor-Leuchtbereichs durch die Lichtstrahlen gebildet ist, welche durch Reflexion der von der Lichtquelle kommenden Lichtstrahlen an Punkten der Innenseite der Reflektoreinheit mit stärkster Neigung in Richtung der optischen Achse abgestrahlt werden. Dies bedeutet, dass die so abstrahlenden Lichtstrahlen in einem ersten Abschnitt entlang der optischen Achse gebündelt werden bzw. auf eine Kegelspitze zulaufen bzw. bei entsprechender Symmetrie der beteiligten Komponenten sich in einem Einschnürbereich auf der optischen Achse treffen. Die in Abstrahlrichtung weiterlaufenden Lichtstrahlen bilden anschließend das sich aufweitende Lichtstrahlbündel innerhalb der Hüllfläche des Reflektor-Leuchtbereichs.

Die Reflektoreinheit ist so abgestimmt ausgebildet, dass die von der Innenseite der Reflektoreinheit reflektierten Lichtstrahlen, welche nicht in Richtung hin zur optischen Achse abgestrahlt werden, also unmittelbar mit der Reflexion in Abstrahlrichtung einen sich aufweitenden Lichtstrahlbündel bilden, sich mit einem Winkel in vergleichbarer Größe aufweiten, wie die Hüllfläche des Reflektor-Leuchtbereichs nach der Einschnürstelle. Mit der erfindungsgemäßen Leuchtvorrichtung kommt es in Abstrahlrichtung zu einer vergleichmäßigenden Überlagerung des überwiegenden Teils der Lichtstrahlen, die von der Leuchtvorrichtung in Abstrahlrichtung abgestrahlt werden.

Weiter ist es vorteilhaft, dass die Linse derart vorhanden ist, dass die Linse im Wesentlichen nur den Teil des Lichtes der Lichtquelle erfasst, welche die Leuchtvorrichtung ohne Reflexion an der Reflektoreinheit die Leuchtvorrichtung in Abstrahlrichtung verlassen würde. Die entsprechenden der Linse zugeordneten Lichtstrahlen ergeben einen z. B. trichterartigen Abstrahlkegel. Mit der vorgeschlagenen Positionierung und/oder Formgebung der Linse lässt sich eine hohe Effizienz des von der Lichtquelle bereitgestellten Lichtes erreichen. Die gesamten gemäß der Lichtverteilungskurve von der Lichtquelle abgestrahlten Lichtstrahlen können damit entweder von der Reflektoreinheit in die Abstrahlrichtung reflektiert oder von der Linse und in die Abstrahlrichtung im Linsen-Leuchtkegel gebündelt werden. Damit wird der Anteil von ungenutzten Lichtanteilen der Lichtquelle minimiert.

Eine besonders vorteilhafte Variante der Erfindung ist dadurch definiert, dass die Linse so positioniert ist, dass im Wesentlichen kein von der Reflektoreinheit kommendes Licht von der Linse erfasst wird. Die Linse wird insbesondere von keinen Lichtstrahlen durchlaufen, welche von der Reflektoreinheit kommen bzw. von dieser oder anderen Elementen der Leuchtvorrichtung in Richtung der Linse reflektiert werden. Damit lässt sich die Gesamtleistung der Leuchtvorrichtung optimieren.

Weiter ist es vorteilhaft, dass die Reflektoreinheit eine von Licht der Lichtquelle beaufschlagbare Innenseite aufweist, welche benachbart vorhandene erhöhte und vertiefte Bereiche umfasst. Die erhöhten und vertieften Bereiche verlaufen insbesondere in Richtung eines Zentrums der Reflektoreinheit. Die erhöhten und vertieften Bereiche sind vorteilhaft über sich ändernde Querschnitte der Reflektoreinheit regelmäßig ausgebildet, insbesondere vorteilhafterweise als längliche Erhebungen und längliche Vertiefungen vorhanden. Die Längserstreckung der erhöhten bzw. vertieften Bereiche ergibt sich in Hauptstrahlrichtung bzw. in Abstrahlrichtung. Vorteilhafterweise ist die Innenseite bzw. die reflektierende Seite des Reflektors bzw. der Reflektoreinheit durch eine Längsrippung bzw. durch alternierende gleichartige Längsrippen und Längsrillen gebildet. Die Breite der Längsrillen und die Breite der Längsrippen ist bevorzugt identisch oder annähernd gleich bzw. in Längsrichtung bevorzugt gleichbleibend.

Eine weitere vorteilhafte Variante der Erfindung zeichnet sich dadurch aus, dass die Reflektoreinheit eine von Licht der Lichtquelle beaufschlagbare Innenseite mit Erhebungen und Vertiefungen aufweist, welche entlang eines Querschnitts senkrecht zur Hauptstrahlrichtung bzw. Abstrahlrichtung eine alternierende konkave und konvexe Form ausbilden. Insbesondere ist eine der Lichtquelle zugewandte Innenseite des Reflektors mit gleichmäßiger Innen- bzw. Außenwölbung der vorteilhafterweise streifenförmigen Erhebungen und Vertiefungen realisiert, was die gewünschte Homogenisierung der Lichtwirkung der Lichtabbildung verbessert.

Vorteilhafterweise weist die Reflektoreinheit eine von Licht der Lichtquelle beaufschlagbare durchgehend konkav ausgebildete Innenseite auf. Damit ist eine Grundform der Reflektoreinheit definiert, zum Beispiel in der Art einer in Abstrahlrichtung offenen Halbschale, z. B. mit einer weiteren Öffnung am Grund der Halbschale, in deren Bereich die Lichtquelle angeordnet sein kann. Durch die konkave Grundform nicht ausgeschlossen sind die ggf. vorhandenen erhöhten bzw. vertieften Bereiche, die dementsprechend dann entlang der konkaven Form der Innenseite der Reflektoreinheit verlaufen.

Es ist außerdem vorteilhaft, dass die Linse eine Beschichtung zur Beeinflussung der Art der abgestrahlten Lichtfarbe der Leuchtvorrichtung aufweist. Damit ist die von der Linse abgestrahlte Lichtfarbe beeinflussbar und damit die Gesamtlichtfarbe der Leuchtvorrichtung.

Damit können insbesondere Spezialanwendungen der Leuchtvorrichtung bzw. einer entsprechenden Leuchte bzw. eines Strahlers vorteilhaft realisiert werden. So besteht beispielsweise die Möglichkeit, die abgestrahlte Lichtfarbe als so genanntes "Metzgerlicht" oder zum Beispiel als "Bäckerlicht" für Auslagen in Bäckereien oder Metzgereien bereitzustellen.

Auch ist es vorteilhaft, dass die Linse austauschbar aufgenommen ist. Hierzu kann beispielsweise eine die Linse lösbar bzw. klemmend aufnehmende Drahtbügelaufnahme vorgesehen werden.

Auf diese Weise lässt sich je nach Einsatzzweck der Leuchtvorrichtung die Linse austauschen bzw. gegen eine modifizierte bzw. andere Linse auswechseln, was auch im Hinblick auf einen Austausch einer beschädigten Linse vorteilhaft ist.

Die Erfindung betrifft außerdem eine Leuchte mit einer Leuchtvorrichtung in einer der oben genannten Ausbildungen.

Damit können zum Beispiel Raumleuchten wie beispielsweise Decken- oder Wandleuchten bzw. entsprechende Strahler vorteilhaft gestaltet werden.

Vorteilhafterweise ist es möglich, die oben im Zusammenhang mit der Leuchtvorrichtung diskutierten Vorteile und Merkmale bei einer Leuchte entsprechend zu realisieren.

Mit der erfindungsgemäßen Leuchte ist erreichbar, dass zumindest nahezu sämtliche Lichtstrahlen der Lichtquelle in eine gewünschte Raumrichtung mit homogener Lichtwirkung abgestrahlt werden. Insbesondere lässt sich mit der erfindungsgemäßen Leuchte vorteilhafterweise eine direkte Blendung durch überhöht bzw. verstärkt ausgestrahlte Bereiche im Lichtbündel der Leuchte vermeiden.

Im Vergleich zu bekannten Leuchten bzw. Leuchtvorrichtungen wird insbesondere ein vergleichsweise größerer Abstrahlwinkel durch die Reflektoreinheit erreicht und damit die verbesserte Ausleuchtung und Homogenität des beleuchteten Bereichs erreicht.

Gegenüber herkömmlichen Leuchten mit Reflektor-Einheiten und Linsen, die in der Lichtabbildung einen schattigen Bereich im Inneren aufweisen, welcher durch auf den Reflektor fallende Strahlen und auch vom Reflektor reflektierte Strahlen nicht bestrahlt wird, erweist sich die vorgeschlagene Leuchte vorteilhaft.

### Figurenbeschreibung

Weitere Merkmale und Vorteile der Erfindung sind anhand teilweise stark schematisch gezeigter Ausführungsbeispiele der Erfindung näher erläutert.

Im Einzelnen zeigt:
- Figur 1a: Längsschnitt längs der optischen Achse durch Hauptkomponenten einer bekannten Leuchtvorrichtung im Beleuchtungsmodus samt einem Teil des ausgeleuchteten Bereichs,
- Figur 1b: Schnitt quer zur optischen Achse durch den ausgeleuchteten Bereich aus Figur 1a gemäß der Linie B-B,
- Figur 2a: eine zu Figur 1a entsprechende Schnittansicht durch Hauptkomponenten einer erfindungsgemäßen Leuchtvorrichtung,
- Figur 2b: ein verkleinert dargestellter Schnitt quer zur optischen Achse durch den ausgeleuchteten Bereich aus Figur 2a gemäß der Linie C-C, wobei die Position der Schnittebene in Figur 1a nicht maßstäblich dargestellt ist,
- Figur 3: eine Schnittansicht eines ersten Abschnitts des ausgeleuchteten Bereichs einer schematisierten erfindungsgemäßen Leuchtvorrichtung im Beleuchtungsmodus,
- Figur 4: eine vergrößerte schematisierte Schnittansicht durch eine alternative erfindungsgemäße Leuchtvorrichtung mit transparent angedeuteter Reflektoreinheit im Beleuchtungsmodus mit einem ersten Abschnitt des ausgeleuchteten Bereichs,
- Figur 5: eine perspektivische Ansicht schräg von vorne auf Hauptkomponenten einer in der Grundform gemäß Figur 2a ausgebildeten erfindungsgemäßen Leuchtvorrichtung,
- Figur 6: eine Draufsicht von vorne auf die Anordnung gemäß Figur 5 und
- Figur 7: eine Ansicht im Längsschnitt durch die optische Achse der Anordnung gemäß Figur 5 bzw. 6.

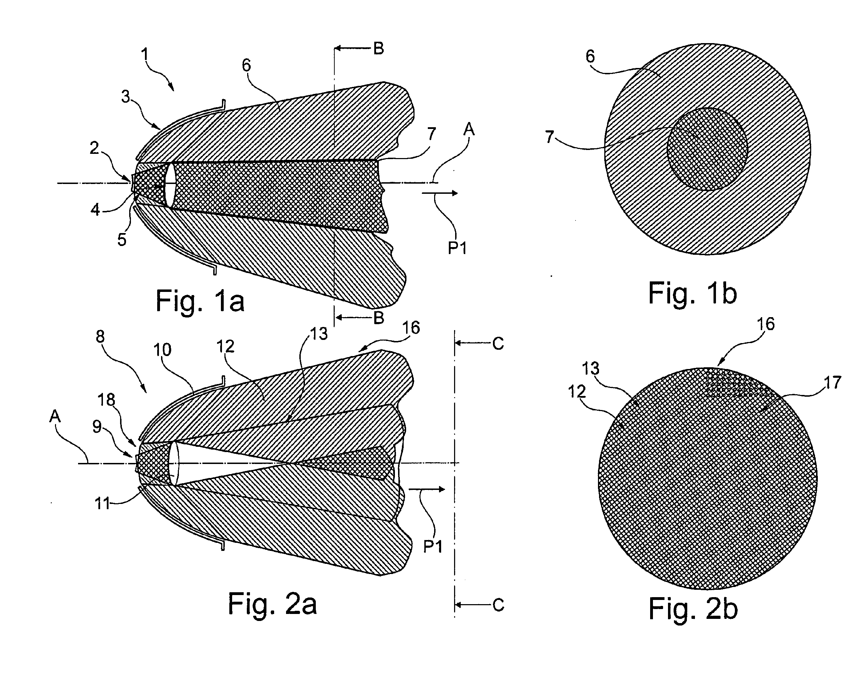

Die Figuren 1a und Figur 1b beziehen sich auf Hauptkomponenten einer Leuchtvorrichtung 1 aus dem Stand der Technik, welche in bekannten Leuchten Verwendung finden. Die Leuchtvorrichtung 1 umfasst eine Lichtquelle 2, welche im Bereich einer Öffnung 5 am Boden eines Reflektors 3 der Leuchtvorrichtung 1 vorhanden ist. Außerdem ist auf einer optischen Achse A der Leuchtvorrichtung 1 in Abstrahlrichtung P1 vor der Lichtquelle 2 eine optische Linse 4 vorhanden. Die Linse 4 ist um die zentrale Achse A innerhalb eines Hohlvolumens des Reflektors 2 positioniert. Der Reflektor 3 ist hier in der Art eines Hohlspiegels ausgebildet.

Des Weiteren sind unterschiedliche ausgeleuchtete Bereiche angedeutet, welche sich bei lichtabstrahlender Lichtquelle 2 ergeben. Diese umfassen außen einen in Hauptabstrahl- bzw. Abstrahlrichtung P1 sich außen aufweitenden ringartigen Reflektor-Leuchtbereich 6, der durch Licht der Lichtquelle 2 durch Reflexion an der Innenseite des Reflektors 2 gebildet wird. Innen um die zentrische optische Achse A ist vom Reflektor-Leuchtbereich 6 umgeben ein von der Linse 4 gebildeter sich leicht aufweitender Linsen-Leuchtkegel 7 ausgebildet, der den zentralen Volumenbereich um die Achse A abdeckt, der vom Reflektor-Leuchtbereich 6 nicht durchstrahlt wird.

Die Leuchtvorrichtung 1 bildet somit eine erste ringförmige Lichtabbildung in Form des Reflektor-Leuchtbereichs 6 mit einem nicht ausgeleuchteten mittleren Bereich und eine zweite Lichtabbildung bzw. den Linsen-Leuchtkegel 7 zur Ausleuchtung der Mitte mit von der Linse kommendem Licht. Auf diese Weise entsteht eine im Schnitt gemäß Figur 1b rund ausgefüllte Lichtabbildung mit einzeln bzw. unterschiedlich erzeugten Bereichen 6 und 7. Die Art der unterschiedlichen Bereitstellung der beiden Lichtabbildungen bewirkt deren untereinander unterschiedliche Lichtintensität. Durch den Linsen-Leuchtkegel 7 wird eine Blendwirkung für das menschliche Auge hervorgerufen. Das insgesamt inhomogene Ausleuchtungsfeld des beleuchtbaren Bereichs durch die beiden Bereiche 6 und 7 ist bei vielen Anwendungen bzw. häufig nicht gewünscht bzw. nachteilig. Des Weiteren ist die Effizienz solcher bekannter Leuchtvorrichtungen nicht optimiert.

Die Figuren 2a und 2b zeigen stark schematisch Grundkomponenten einer erfindungsgemäße Leuchtvorrichtung 8 im Beleuchtungsmodus, welche gegenüber dem Stand der Technik verbessert ist.

Die Leuchtvorrichtung 8 umfasst im Ausführungsbeispiel gemäß Figur 2a eine künstliche Lichtquelle 9, insbesondere eine energiesparende LED-Lichtquelle mit einer lichtemittierenden Diode bzw. LED oder mit mehreren LEDs, einen Reflektor 10, welcher in Hohlform ausgebildet ist, und eine optische Linse 11, hier eine Sammellinse.

Die Lichtquelle 9 und die Linse 11 sind auf der optischen Achse A angeordnet. Der Reflektor 10, der ringförmig geschlossen um die optische Achse A angeordnet ist, weist am Bodengrund eine Öffnung 18 auf, durch welche die optische Achse A durchläuft und in deren Bereich die Lichtquelle 9 vorhanden ist. Im gezeigten Beleuchtungsmodus strahlt die Leuchtvorrichtung 8 in Abstrahlrichtung P1 ab und bildet eine entsprechende Lichtabbildung 16.

Die Lichtabbildung 16 umfasst einen ringartigen Reflektor-Leuchtbereich 12 der Leuchtvorrichtung 8 mit einem größeren Abstrahlwinkel gegenüber der Leuchtvorrichtung 1. Des Weiteren umfasst die Lichtabbildung 16 einen von der Linse 11 gebildeten Linsen-Leuchtkegel 13, welcher ebenfalls aufweitend ausgebildet ist, im Vergleich zu dem Linsen-Leuchtkegel 7 insbesondere mit stärkerer Aufweitung.

Figur 2b zeigt einen Schnitt quer zur optischen Achse A in einem insbesondere für Raumleuchten praxisrelevanten Abstand zur Leuchtvorrichtung 8, wobei sich ein homogen ausgeleuchteter Ausleuchtungsbereich 17 durch Überlappung bzw. Überlagerung des Reflektor-Leuchtbereichs 12 und des Linsen-Leuchtkegels 13 ergibt.

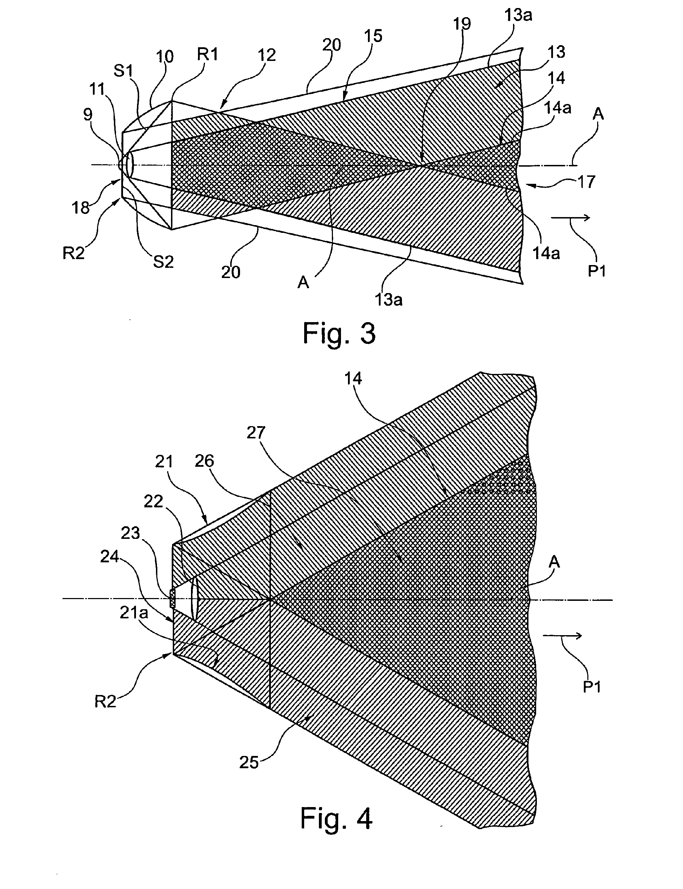

Zur Verdeutlichung der Strahlengänge der von der Leuchtvorrichtung 8 abgestrahlten Lichtstrahlen dient Figur 3, welche die Leuchtvorrichtung 8 im Beleuchtungsmodus im Längsschnitt durch die optische Achse A zeigt.

Der Linsen-Leuchtkegel 13 weist eine Hüllfläche 15 auf, die von Grenzstrahlen 13a gebildet wird, die außen die Linse 11 durchlaufen.

Der Reflektor-Leuchtbereich 12 weist eine Hüllfläche 14 auf, die von Grenzstrahlen 14a gebildet wird.

Der Ausleuchtungsbereich 17, der in betrachtete Querschnitten einen gemäß Figur 2b in praxisrelevanten Abständen zur Leuchtvorrichtung vollflächig homogen ausgeleuchteten "hot spot" bildet, wird durch Überlagerung des Linsen-Leuchtkegels 13 und des Reflektor-Leuchtbereichs 12 in Abstrahlrichtung P1 ab einem Einschnürbereich 19 erhalten.

Wie gemäß Figur 3 deutlich wird, werden von einem umlaufenden äußeren Rand R1 des Reflektors 10 kommende Grenzstrahlen 14a, die von der Lichtquelle 9 zum Rand R1 gemäß Strahlen S1 herrühren, zunächst in Richtung der optischen Achse A am Einschnürbereich 19 reflektiert und dann die Hüllfläche 14 des Reflektor-Leuchtbereichs 12 bildend aufgeweitet.

Von der Lichtquelle 9 werden zudem Lichtstrahlen S2 auf Punkte eines inneren Randes R2 des Reflektors 10 um die Öffnung 18 gestrahlt, welche als äußerste aufweitend verlaufende Strahlen 20 in Abstrahlrichtung P1 reflektiert werden und den Reflektor 10 verlassen.

Der Ausleuchtungsbereich 17 bzw. der "hot spot" wird ab dem systembedingten Abstand zur Leuchtvorrichtung am Einschnürbereich 19 in Abstrahlrichtung demgemäß durch die Überlagerung des Anteils des Reflektor-Leuchtbereichs 12, der durch die Hüllfläche 14 definiert ist, und des Linsen-Leuchtkegels 13 überlagert. Mit größer werdendem Abstand zur Leuchtvorrichtung 8 entlang der Achse A weitet sich der Ausleuchtungsbereich 17 auf, bis z. B. die in Figur 2b gezeigten Verhältnisse eintreten.

Außen um den Ausleuchtungsbereich 17 verbleibt ein schmaler ringförmiger Rand, der von Licht des Reflektors 10 herrührt ohne Überlagerung mit anderen Lichtstrahlen.

Im in Abstrahlrichtung P1 vergleichsweise kurzen Nahbereich vor der Leuchtvorrichtung 8 bis etwa zum Einschnürbereich 19 herrschen andere Verhältnisse, was aber in der Praxis nicht relevant ist.

Figur 4 betrifft eine stark schematische vergrößerte Ansicht einer alternativen erfindungsgemäßen Leuchtvorrichtung mit einem Reflektor 21, mit einer konvex ausgebildeten Innenseite 21a. Des Weiteren ist eine Linse 22 und eine Lichtquelle 23 vorgesehen. Am Boden des Reflektors 21 ist eine Öffnung 24 mit dem Rand R2 vorhanden.

Im in Figur 4 gezeigten Beleuchtungsmodus wird ein Reflektor-Leuchtbereich 25 und ein Linsen-Leuchtkegel 26 gebildet, die beide den zumindest annähernd gleichen Aufweitungswinkel aufweisen und im Bereich 27 zu einer homogenen Lichtabbildung überlagern bzw. einen "hot spot" der Leuchtvorrichtung bilden. Im Unterschied zu Figur 3 werden am inneren Rand R2 des Reflektors 21 die die optische Achse kreuzenden Lichtstrahlen reflektiert, welche im weiteren Verlauf die Hüllfläche 14 des Bereichs 27 vorgeben.

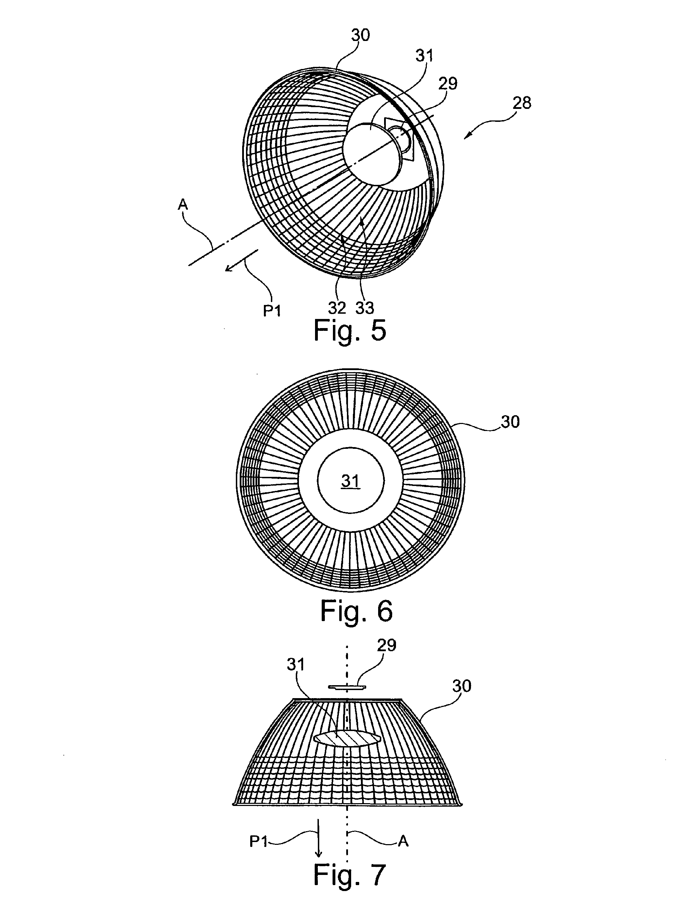

Schließlich zeigen die Figuren 5 bis 7 eine erfindungsgemäße Ausführungsvariante einer Leuchtvorrichtung 28, welche in der Grundform gemäß der Leuchtvorrichtung aus Figur 2a ausgebildet ist und eine LED-Lichtquelle 29, einen axial jeweils offenen Hohlspiegel-Reflektor 30 und eine optische Linse 31 umfasst.

Der Hohlspiegel-Reflektor 30 weist innenseitig eine in Abstrahlrichtung P1 bzw. längs der optischen Achse A verlaufende regelmäßige Rippung bzw. abwechselnd sich erstreckende Rippen 32 und Vertiefungen 33 auf.

### Bezugszeichenliste:

- 1: Leuchtvorrichtung
- 2: Lichtquelle
- 3: Reflektor
- 4: Linse
- 5: Öffnung
- 6: Reflektor-Leuchtbereich
- 7: Linsen-Leuchtkegel
- 8: Leuchtvorrichtung
- 9: Lichtquelle
- 10: Reflektor
- 11: Linse
- 12: Reflektor-Leuchtbereich
- 13: Linsen-Leuchtkegel
- 13a: Grenzstrahl
- 14: Hüllfläche
- 14a: Grenzstrahl
- 15: Hüllfläche
- 16: Lichtabbildung
- 17: Ausleuchtungsbereich
- 18: Öffnung
- 19: Einschnürbereich
- 20: Strahl
- 21: Reflektor
- 21a: Innenseite
- 22: Linse
- 23: Lichtquelle
- 24: Öffnung
- 25: Reflektor-Leuchtbereich
- 26: Linsen-Leuchtkegel
- 27: Bereich
- 28: Leuchtvorrichtung
- 29: Lichtquelle
- 30: Reflektor
- 31: Linse
- 32: Rippe
- 33: Vertiefung

## Patentansprüche

1. Leuchtvorrichtung (8, 28) für eine Leuchte zur Bildung eines beleuchteten Bereichs in einer Abstrahlrichtung der Leuchtvorrichtung (8, 28), wobei die Leuchtvorrichtung (8, 28) eine Lichtquelle (9, 23, 29) und eine Linse (11, 22, 31), die entlang einer optischen Achse angeordnete sind, und eine außen um die optische Achse angeordnete Reflektoreinheit (10, 21, 30) aufweist, und wobei durch Licht der Lichtquelle (9, 23, 29) ein von der Linse (11, 22, 31) gebildeter Linsen-Leuchtkegel (13, 26) und ein von der Reflektoreinheit (10, 21, 30) gebildeter Reflektor-Leuchtbereich (12) erzeugbar ist, **dadurch gekennzeichnet, dass** die Linse (11, 22, 31), die Reflektoreinheit (10, 21, 30) und die Lichtquelle (9, 23, 29) derart aufeinander abgestimmt sind, dass eine Außenform einer Hüllfläche (15) des Linsen-Leuchtkegels (13), die sich durch am weitesten aufgespreizte Lichtstrahlen von der Lichtquelle (9, 23, 29) ergibt, die gerade noch die Linse (11, 22, 31) in ihrem Randbereich durchlaufen, und eine Außenform einer Hüllfläche (14) des Reflektor-Leuchtbereichs (12, 25), die sich durch Lichtstrahlen der Lichtquelle (9, 23, 29) ergibt, welche die Linse (11, 22, 31) nicht mehr durchlaufen und mit größtem Neigungswinkel die optische Achse kreuzend von der Reflektoreinheit (10, 21, 30) reflektiert werden, über die wesentliche Länge der optischen Achse zumindest annähernd übereinstimmen, wobei eine Lichtwirkung des Linsen-Leuchtkegels (13, 26) und eine Lichtwirkung des Reflektor-Leuchtbereichs (12, 25) sich zu einer nahezu homogenen Lichtwirkung des beleuchtbaren Bereichs ergänzen.

2. Leuchtvorrichtung nach Anspruch 1, **dadurch gekennzeichnet, dass** die Linse (11, 22, 31) derart vorhanden ist, dass die Linse (11, 22, 31) im Wesentlichen nur den Teil des Lichtes der Lichtquelle (9, 23, 29) erfasst, welcher die Leuchtvorrichtung ohne Reflexion an der Reflektoreinheit (10, 21, 30) die Leuchtvorrichtung Leuchtvorrichtung (8, 28) in Abstrahlrichtung verlassen würde.

3. Leuchtvorrichtung nach Anspruch 1 oder Anspruch 2, **dadurch gekennzeichnet, dass** die Linse (11, 22, 31) so positioniert ist, dass im Wesentlichen kein von der Reflektoreinheit (10, 21, 30) kommendes Licht von der Linse (11, 22, 31) erfasst wird.

4. Leuchtvorrichtung nach einem der vorhergehenden Ansprüche, **dadurch gekennzeichnet, dass** die Reflektoreinheit (30) eine von Licht der Lichtquelle (29) beaufschlagbare Innenseite aufweist, welche benachbart vorhandene erhöhte und vertiefte Bereiche (32, 33) umfasst.

5. Leuchtvorrichtung nach einem der vorhergehenden Ansprüche, **dadurch gekennzeichnet, dass** die Reflektoreinheit (30) eine von Licht der Lichtquelle (29) beaufschlagbare Innenseite mit Erhebungen und Vertiefungen (32, 33) aufweist, welche entlang eines Querschnitts senkrecht zur Hauptstrahlrichtung eine alternierende konkave und konvexe Form ausbilden.

6. Leuchtvorrichtung nach einem der vorhergehenden Ansprüche, **dadurch gekennzeichnet, dass** die Reflektoreinheit (10, 30) von Licht der Lichtquelle (9, 29) beaufschlagbare durchgehend konkav ausgebildete Innenseite aufweist.

7. Leuchtvorrichtung nach einem der vorhergehenden Ansprüche, **dadurch gekennzeichnet, dass** die Reflektoreinheit (21) eine der Lichtquelle (23) zugewandte durchgehend konvex ausgebildete Innenseite (21a) aufweist.

8. Leuchtvorrichtung nach einem der vorhergehenden Ansprüche, **dadurch gekennzeichnet, dass** die Linse eine Beschichtung zur Beeinflussung der Art der abgestrahlten Lichtfarbe aufweist.

9. Leuchtvorrichtung nach einem der vorhergehenden Ansprüche, **dadurch gekennzeichnet, dass** die Position der Linse entlang der optischen Achse veränderbar einstellbar ist.

10. Leuchtvorrichtung nach einem der vorhergehenden Ansprüche, **dadurch gekennzeichnet, dass** die Linse austauschbar aufgenommen ist.

11. Leuchte mit einer Leuchtvorrichtung nach einem der vorhergehenden Ansprüche.
